# EUROPEAN PATENT SPECIFICATION

(11) **EP 1 842 219 B1**
(45) Date of publication and mention of the grant of the patent: **30.06.2010**
(21) Application number: 06703941.2
(22) Date of filing: 05.01.2006
(51) Int. Cl.: H01J 7/20, C22C 7/00

(54) **MERCURY DISPENSING COMPOSITIONS AND DEVICE USING THE SAME**
ZUSAMMENSETZUNGEN ZUR ABGABE VON QUECKSILBER UND VORRICHTUNG DAMIT
COMPOSITIONS A DEGAGEMENT DE MERCURE

(30) Priority: 17.01.2005 IT MI20050044
(43) Date of publication of application: 10.10.2007
(73) Proprietor: SAES GETTERS S.p.A., I-20020 Lainate (IT)
(72) Inventor: MASSARO, Vincenzo, I-20080 Albairate (IT); GIORGI, Stefano, Paolo, I-20046 Biassono (IT); BOVISIO, Magda, I-20151 Milano (IT); BOFFITO, Claudio, I-20014 Nerviano (IT); CORAZZA, Alessio, I-22030 Como -Camnago Volta CO (IT)
(74) Representative: Adorno, Silvano
(86) International application number: PCT/IT2006/000002
(87) International publication number: WO 2006/075347

(56) References cited:
- WO-A-98/53479
- DE-A1- 19 528 390
- US-A- 3 544 829
- US-A- 3 663 121
- US-A- 6 099 375

## Description

The present invention relates to mercury dispensing compositions.

The compositions of the invention are particularly suitable for the use in dosing mercury inside fluorescent lamps.

As known, fluorescent lamps require for their operation a gaseous mixture at pressures of some hundreds of hectoPascal (hPa), formed by noble gases and mercury vapors. In the past mercury was introduced into the lamps in liquid form, either by direct dripping into the lamp, or inside of small glass vials which afterwards were opened inside the lamp. However, due to the toxicity of mercury, the most recent international regulations have imposed the use of the lowest possible quantity of the element, compatibly with the lamps functionality; this has rendered the liquid dosage methods obsolete, because these are not capable of dosing in lamps quantities of mercury of few milligrams or even smaller than one milligram.

Another method for the introduction of mercury into lamps is by means of metal amalgams. However, this method implies a problem: some manufacturing steps of the lamps are carried out at relatively high temperatures, generally higher than 400 °C, when the lamp is not sealed yet, while the mercury release from these materials starts already at low temperatures, between about 100 and 300 °C depending on the metal with which mercury is amalgamated; in these conditions emissions of mercury, which is a harmful metal for health, occur into the working environment.

In order to overcome these problems, it was proposed in the past the use of various solid products which allow to overcome or at least reduce the problems seen before.

US Patent No. 3,657,589 in the Applicant's name discloses TiₓZr_{y}Hg_{z} compounds, which do not release mercury when heated up to about 500 °C, but can release it when heated to about 800-900 °C (so-called activation treatment); the preferred compound of this family is Ti₃Hg, sold under the trade name St 505. These compounds have the advantage that they can be powdered and dosed into small weight quantities for producing mercury dispensing devices containing the required amount of this metal. A problem of these compounds is, however, that they undergo a partial oxidation during the lamp manufacturing steps, whereby the amount of mercury released during activation is only about 40% of the total mercury content, which forces to introduce into the lamp a quantity of mercury noticeably larger than necessary, with disposal problems at the end of the life of the lamps.

British patent application GB-A-2,056,490 discloses Ti-Cu-Hg compositions having better properties of mercury release compared to those of the compounds of patent US 3,657,589. In particular, these compounds are stable in air up to about 500 °C, while by heating up to 800-900 °C they release quantities of mercury higher than 80%, or even than 90%.

The patents US 5,520,560, US 5,830,026 and US 5,876,205 disclose combinations of powders of the compound St 505 with a promoter of the mercury yield (respectively, copper-tin alloys with possible additions of small quantities of other transition elements; copper-silicon alloys; and copper-tin-Rare Earths alloys); the addition of the promoter allows to increase the mercury yield from the compound St 505 up to values of 80-90%, even after its oxidation, thus avoiding the need of using a large excess of mercury as happens with the compound St 505 used alone.

Finally, US Patent No. 4,464,133 proposes to use mixtures of powders of the compound Ti₃Hg with an element selected between nickel or copper; according to what is stated in this document, by these mixtures it is possible to achieve the mercury release already at the temperature of 770 °C.

The releasing of mercury from these mixtures and compositions is normally obtained by heating by means of radiofrequencies, by positioning an induction coil externally to the lamp in a position close to the device which comprises the mercury containing material; good yields of the metal are achieved by heating treatments of total duration of about 20-30 seconds per lamp.

However, the properties of mercury releasing from known compositions and mixtures, although good, are not yet completely satisfactory for lamp manufacturers. An optimal mercury dispenser for lamp manufacturing should have the following features:
- zero metal emissions up to at least 500 °C, and possibly up to about 600 °C, for being used also in the manufacturing of circular lamps, wherein some operations require higher temperatures than in the case of linear lamps;
- total or almost total yield of mercury so that, for the same quantity of mercury released in the lamp, the initial amount of mercury present in the device is the lowest possible, to comply with international regulations on the use of harmful materials in industrial manufacturing;
- an activation temperature lower than those used hitherto, to reduce the energy consumption in the manufacturing line (the induction coils have to be provided with a lower power);
- shorter activation times with respect to those required by the compositions used hitherto, to increase productivity.

Object of the present invention is to provide mercury dispensing compositions which satisfy the above requirements of lamp manufacturers.

This and other objects are obtained according to the present invention by means of compositions comprising:
- a first component, **A**, being a compound comprising mercury and at least a metal selected between titanium and zirconium; and
- a second component, **B**, consisting of aluminum or either a compound or an alloy containing at least 40% by weight of aluminum and having melting temperature equal or lower than that of this element,
wherein component **A** may be present in weight percentage equal or lower than 90%.

Further, the compositions of the invention may optionally comprise a third component, **C**, selected among metals or compounds able to react exothermically with aluminum. The possible compositions in the case of this third component being present are reported below.

In the remainder of the description all percentages regarding the composition of the components **A**, **B** and **C**, as well as their ratios, are to be intended by weight unless otherwise indicated.

The inventors have found that the compositions of the invention (with two or three components) are able, if heated to 650 °C, to give rise to an exothermic reaction which causes a localized temperature increase of some hundreds of degrees Celsius in few seconds; it is thus caused the practically complete emission of mercury from the compound containing the same, even with a heating from outside of duration reduced with respect to the processes presently in use.

The invention will be described in the following with reference to the drawings wherein:
- Fig. 1 shows a ternary diagram wherein the range of the possible compositions according to the invention is illustrated, by weight percentage;
- Figs. 2 through 6 show some possible shapes of mercury dispensing devices that can be manufactured by using the compositions of the invention; and
- Fig. 7 shows a curve which illustrates the temperature increase of a composition of the invention when heated.

The component **A** of the compositions of the invention is a compound comprising mercury, at least one element selected between titanium and zirconium, and optionally also copper or a combination of copper and tin. Components **A** suitable for the purposes of the present invention are the Ti-Hg compounds (and particularly the Ti₃Hg compound) disclosed in the US Patent No. 3,657,589; the Ti-Cu-Hg compounds disclosed in the British patent application GB-A-2,056,490; and the Ti-Cu-Sn-Hg compounds disclosed in international patent application PCT/IT2005/000389 in the Applicant's name.

The component **B** of the compositions of the invention can be aluminum; as an alternative it is possible to use a compound or alloy which contains at least 40% by weight of aluminum and has a melting temperature not higher than that of aluminum. For the objects of the invention the alloys Al-Cu have proved to be suitable, in particular those with composition close to the eutectic A1 68% - Cu 32%, the intermetallic compound with composition A1 46.6% - Cu 53.4% or the Al-Cu alloys with composition proximate thereto; further, the Al-Si alloys are suitable, for example with composition corresponding or proximate to the eutectic A1 87.3% - Cu 12.7%, and the Al-Cu-Sn alloys.

Finally, the optional component C of the compositions of the invention is a metal or a compound (generally an oxide) able to react exothermically with aluminum. This third component can be selected among the transition metals, in particular Ni, Fe, Y, Ti and Zr, Rare Earths, or some oxides such as iron oxide, Fe₂O₃, copper oxide, CuO, or manganese oxide, MnO₂.

In case of compositions with two components (**A** and **B**), the weight of the component **A** can reach 90% of the total weight of the composition. In compositions even richer in component **A**, the amount of component **B** is excessively reduced and the increase in temperature due to the exothermic reaction is not sufficient to cause a complete releasing of the mercury contained in **A**.

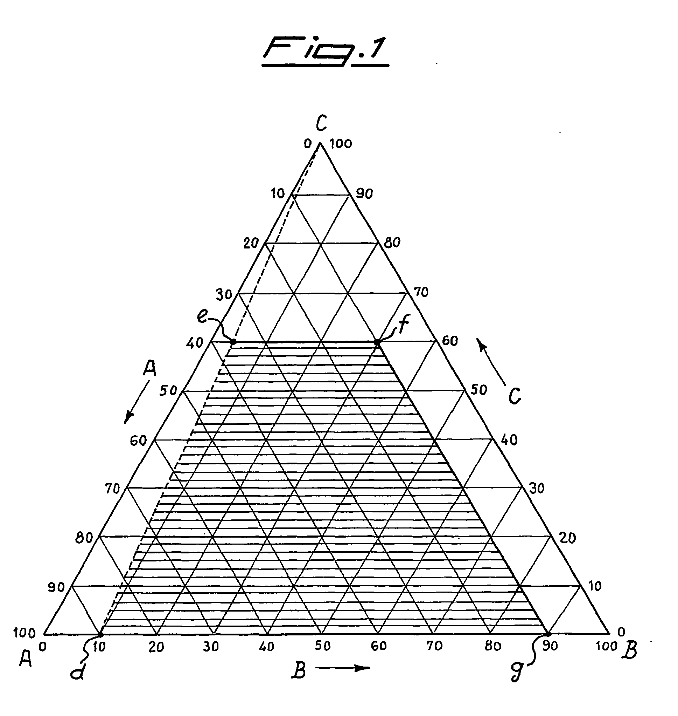

The condition that the component **A** is present up to 90% by weight in the compositions of two components can be expressed also by stating that the weight ratio between **A** and **B** can be equal or lower than 9:1 (**A**:**B** ≤9:1). This condition, expressed in this second way, holds as well, for the same reason stated above, also in case of compositions containing also the third component **C**. Figure 1 shows a ternary diagram (percentages by weight) of the possible compositions **A**-**B**-**C**. The binary composition **A**-**B** corresponding to the maximum content of A is the point d in the drawing; in this figure, the range of compositions wherein **A**:**B** ≤9:1 is represented by all compositions on the right hand of the broken line which links point d to the vertex representing component **C**.

Even if all compositions on the right hand of the segment d-**C** in Figure 1 show the effect of rapid and complete release of mercury contained in the component **A**, the compositions which fall in some parts of the thus defined area turn out to have scarce practical utility; for instance, compositions wherein the component **A** is present for less than 10% by weight are hardly useful because, in order to have a desired amount of mercury in the lamp, these would require to use devices of uselessly large weight and dimensions; there would be similar problems with compositions wherein the amount of component **C** is more than 60% by weight.

The range of preferred compositions is thus delimited by points d-e-f-g in Figure 1 (cross-hatched area), which correspond to the percentage compositions by weight:
d) **A** 90% - **B** 10% - **C**0%
e) **A** 36% - **B** 4% - **C** 60%
f) **A** 10% - **B** 30% - **C** 60%
g) **A** 10% - **B** 90% - **C** 0%

In case component **C** is an oxide, because of the high exothermicity of the reaction of aluminum with oxygen, it is sufficient and preferable to use small quantities of the component **C**, for example smaller than 20% by weight and even more preferably smaller than 5% by weight.

The two (or three) components of the compositions of the invention can be used in different physical forms. In the case of components which are elemental metals (as the aluminum used as component **B**, or a metal used as component **C**), it is possible to use these components in the shape of strips or parts formed with other configurations, to which the component **A** is brought into contact or is adhered thereon; for example, the composition of the invention in a similar case could consist of powders of component **A** rolled on an aluminum sheet of sufficient thickness or contained in an aluminum tube (component **B**); or further, it is possible to roll powders of the components **A** and **B** (in this case **B** is preferably an aluminum alloy, having a hardness sufficient for rolling) on a strip of a metal as iron or nickel.

However, all components are preferably used in form of powders, of particle size generally smaller than 500 µm, preferably smaller than 250 µm, and more preferably smaller than 125 µm.

As known in the field, in the lamps it is generally necessary to use also a getter material for sorbing traces of gases potentially detrimental to their functioning, such as oxygen, hydrogen or water; an example of getter material widely used in the field is the alloy having composition Zr 84% - A1 16% disclosed in the US Patent No. 3,203,901.

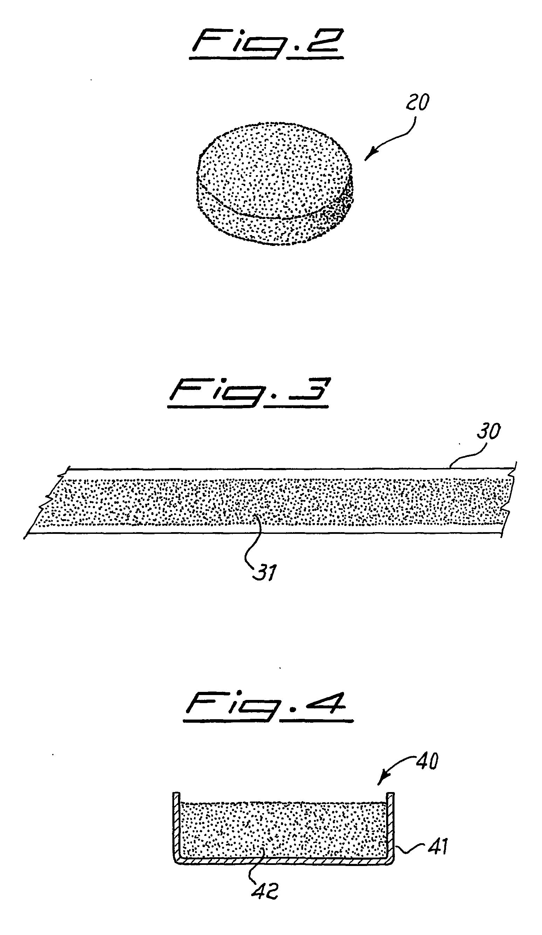

Using powders having the compositions of the invention, mercury dispensing devices of various shapes can be manufactured, some examples thereof being represented in Figures 2 through 6; in these devices it is possible to add optional getter materials, for example mixed in form of powders with the composition of the invention, or added separately in the devices.

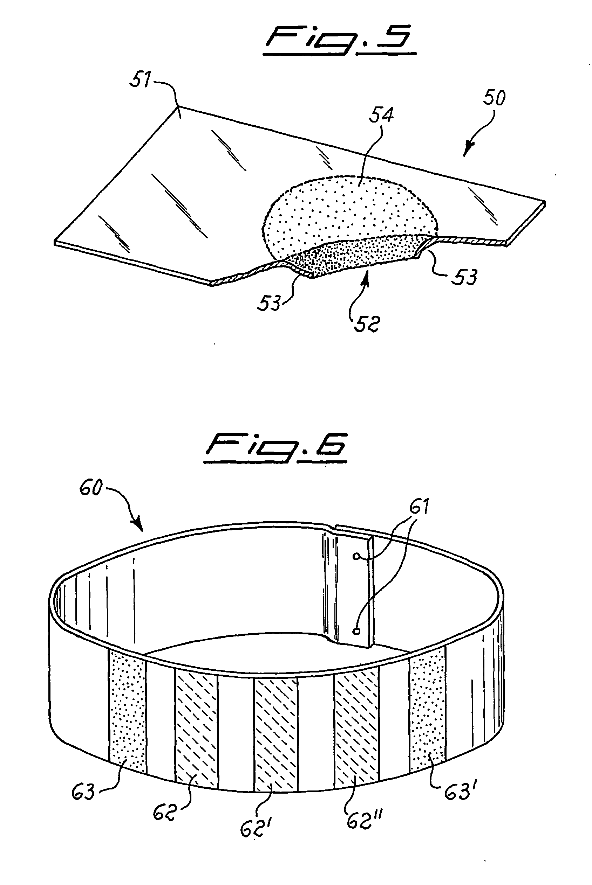

Figure 2 shows a mercury dispenser merely consisting of a pellet 20 of compressed powders having a composition according to the invention. Figure 3 shows a metallic strip 30 coated with powders 31 having a composition according to the invention; from the strip it is possible to obtain, by cutting, discrete devices (not shown in the drawing) for mercury releasing. Figure 4 shows in cross section a device 40 consisting of a container 41 wherein a composition of the invention, 42, is present. Figure 5 shows a broken apart view of another possible device geometry, frequently adopted in the lamp industry mainly for getter devices (that is, the devices present in almost every lamp for sorbing the harmful gases present therein); in this case the device, 50, is formed by a metallic strap 51, which has a hole 52, the edge 53 of which is depressed with respect to the plane of the strap; in the so shaped cavity there is manufactured a pellet of compressed powders of a composition of the invention, 54; the presence of the hole exposes also the back surface of the pellet, so as to increase the surface of exposed powder and maximize the mercury release; the farthest part of the device 50 from the hole 52 is used for fixing to a support inside the lamp. Finally, Figure 6 shows a device which integrates the functions of shielding the electrodes, gettering, and mercury releasing, according to the teaching of the US Patent No. 6,099,375; the device 60 is obtained by closing as a ring (for example by welding spots 61) a piece of a strip similar to that in Figure 3, whereon are however present tracks of many materials; in the example in figure three tracks 62, 62' and 62" having a composition according to the invention and two tracks 63 and 63' of getter material are shown.

For obtaining devices of the type illustrated in Figures 2, 4 and 5, it can be preferable to use aluminum as component **B**, which because of its plasticity deforms during compression and favours the mechanical stability of the powder packets that are present in these devices; vice versa, in the case of devices of the type shown in Figures 3 and 6, which are normally manufactured by cold-rolling, it is preferable to use as component **B** an aluminum alloy, because the higher hardness of the alloys with respect to pure metal favours the anchoring of the powders to the metallic strip during rolling.

By the compositions of the invention it is possible to obtain easily devices with a low, but precise and reproducible, dosage of mercury in a lamp. In devices of the type of Figures 2, 4 and 6 it is possible to use compositions having a low content of component A (for example, compositions close to the segment f-g in Figure 1), thus decreasing the amount of mercury while dimensions and weight of the device are the same; by the devices of Figures 3 and 6, in addition to operate on the composition, it is also possible to control the width of the tracks of the different materials, thus controlling the charging of mercury per unit of length of the metallic strip.

The invention will be further illustrated by the following examples. These non-limiting examples illustrate some embodiments intended to teach those skilled in the art how to put in practice the invention and to show the best mode for performing the invention.

### EXAMPLE 1

In this example it is verified the temperature variation of a pellet manufactured with a composition of the invention, during heating by radiofrequencies.

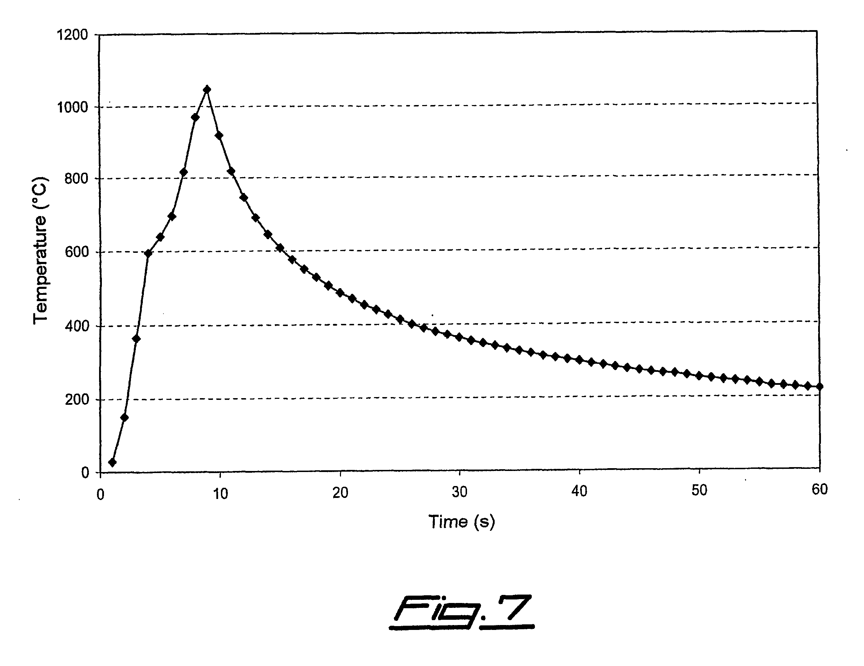

A composition of the invention consisting of 24 milligrams (mg) of powder of Ti₃Hg compound and 16 mg of aluminum powder is prepared; both powders have particle size smaller than 128 µm. The mixture of powders is compressed in an suitable cylindrical mold with a pressure of 1,400 Kg/cm², thus obtaining a pellet having diameter of 4 mm and thickness of about 1 mm. This pellet is introduced in a glass flask which is then evacuated. The pellet is then heated from outside by means of radiofrequencies, and with an optical pyrometer the temperature of the pellet during the test is measured. The temperature variation is shown in Figure 7 as temperature (°C) as a function of time (seconds, s). As shown in the drawing, when 650 °C are reached an abrupt increase in temperature occurs, which can only be caused by a triggering of an exothermic reaction in the system; immediately after the beginning of this increase in temperature, evaporation of mercury takes place, observed through the formation of droplets of liquid mercury in cold spots of the glass wall of the flask; owing to the exothermic reaction the temperature exceeds 1,000 °C in about 3 seconds, and keeps higher than the triggering temperature for about further 8 seconds.

### EXAMPLE 2

In this example the mercury emission properties of various samples of compositions of the invention are measured.

Nine pellets having diameter equal to 4 mm and variable weight and height are manufactured as described in example 1, using different mixtures of components **A**, **B** and **C**; as component **A** the Ti₃Hg compound is again used; as component **B** aluminum is again used; the compositions of the different pellets are given in Table 1, wherein the component **C** used in tests 8 and 9 (the only ones comprising such component) is also indicated. These pellets are introduced one at a time in a glass flask and the evaporation of mercury as described in example 1 is caused. At the end of each test, after cooling the system, the pellet is withdrawn from the flask and dissolved in a solution containing a mixture of nitric and sulfuric acids, bringing mercury into solution as ion Hg²⁺; this is then reduced to metallic mercury with sodium-boron hydride (NaBH₄), and the vapours of the metal are sent to an Atomic Absorption Spectrophotometer, measuring the concentration of mercury in solution; from this datum it can be deduced the amount of residual mercury in the pellet after the test and, as difference between the amount of mercury initially present in the pellet (known from the amount of component A and from the chemical composition thereof) and the residual value so measured, the amount of evaporated mercury is obtained. In Table 1 in the next page the weight of each pellet, of the single components thereof, the (calculated) total amount of mercury contained in each pellet at the beginning of the test, the maximum temperature reached in each test, the amount of mercury released and the yield of mercury (percentage of mercury released with respect to the total) are reported. In all tests triggering temperatures comprised between 650 °C and 660 °C are observed.

The features of the compositions of the invention allow to heat from outside the pellet for times comprised only between about 3 and 5 seconds, while with a composition of the prior art, wherein the release of mercury starts at about 800 °C, times of heating of at least 6 seconds and generally of about 10 seconds are necessary; further, as the complete release of mercury requires that the temperature is at the required values for about 10 seconds, with the compositions of the prior art it is necessary to heat from outside during all evaporation time, while with the compositions of the invention the temperature remains at high values, above 800 °C, for several seconds without the need of heating from outside. This allows to have shorter times of heating from outside, and therefore to increase the hour productivity of the lamp manufacturing lines. Furthermore, all compositions of the invention show very high mercury release yields, all higher than 93% and in one case equal to 98.7%, therefore allowing to reduce the amount of unused mercury to minor values only.

**Table 1**

| Test | Pellet weight (mg) | **A** (mg) | **B** (mg) | **C** (mg) | Hg init. (mg) | T max (°C) | Hg evap. (mg) | Yield Hg (%) |
|---|---|---|---|---|---|---|---|---|
| 1 | 40.9 | 24.5 | 16.4 | / | 13.3 | 980 | 12.7 | 95.4 |
| 2 | 36.6 | 22.0 | 14.6 | / | 11.9 | 1045 | 11.2 | 94.5 |
| 3 | 31.6 | 19.0 | 12.6 | / | 10.2 | 1000 | 9.9 | 96.7 |
| 4 | 31.4 | 18.9 | 12.6 | / | 10.2 | 990 | 9.7 | 95.0 |
| 5 | 30.6 | 18.4 | 12.2 | / | 9.9 | 992 | 9.3 | 93.8 |
| 6 | 29.7 | 17.8 | 11.9 | / | 9.6 | 1018 | 9.5 | 98.7 |
| 7 | 28.0 | 16.8 | 11.2 | / | 9.1 | 1020 | 8.5 | 93.7 |
| 8 | 40.0 | 8.0 | 12.8 | 19.2 (Fe) | 4.3 | 1015 | 4.1 | 95.3 |
| 9 | 40.0 | 16.0 | 11.2 | 12.8 (Ni) | 8.7 | 1030 | 8.3 | 95.4 |

## Claims

1. Mercury dispensing compositions comprising:
- a first component, **A**, being a compound comprising mercury and at least a metal selected between titanium and zirconium; and
- a second component, **B**, consisting of aluminum or either a compound or an alloy thereof
**characterized in that** said second component **B** contains at least 40% by weight of aluminum and has a melting temperature equal or lower than that of this element,
wherein component **A** is present in a weight percentage equal or lower than 90% of the total weight of the composition.

2. Compositions according to claim 1 further comprising a third component, **C**, selected among metals or compounds capable of reacting exothermically with aluminum.

3. Compositions according to claim 1 wherein component **A** further comprises copper or copper and tin.

4. Compositions according to claim 1 wherein component **A** is the Ti₃Hg compound.

5. Compositions according to claim I wherein component **B** is aluminum.

6. Compositions according to claim 1 wherein component **B** is an alloy of aluminum and copper.

7. Compositions according to claim 6 wherein said alloy has percentage composition by weight Al 68% - Cu 32%,

8. Compositions according to claim 1 wherein component **B** is the intermetallic compound having percentage composition by weight Al 46.6% - Cu 53.4%.

9. Compositions according to claim 1 wherein component **B** is an alloy of aluminum and silicon.

10. Compositions according to claim 9 wherein said alloy has percentage composition by weight Al 87.3% - **Si** 12.7%.

11. Compositions according to claim 1 wherein component **B** is an alloy of aluminum, copper and tin.

12. Compositions according to claim 2 wherein component **C** is a metal of transition or of the Rare Earths.

13. Compositions according to claim 12 wherein said metal is selected among Ni, Fe, Y, Ti and Zr.

14. Compositions according to claim 2 wherein component **C** is an oxide selected between iron oxide, Fe₂O₃, copper oxide, CuO, and manganese oxide, MnO₂.

15. Compositions according to claim 2 wherein the weight ratio between the components **A** and **B** is equal or lower than 9:1.

16. Compositions according to claim 2 that, in a ternary diagram of weight percent composition, are comprised in a range delimited by the following points:
d) **A** 90% - **B** 10% - **C** 0%
e) **A** 36% - **B** 4% - **C** 60%
f) **A** 10% - **B** 30% - **C** 60%
g) **A** 10% - **B** 90% - **C** 0%.

17. Compositions according to claim 16 wherein, when component **C** is an oxide, the weight percentage of this component is equal to or lower than 20%.

18. Compositions according to claim 17 wherein said percentage is lower than 5%.

19. Device for mercury dispensing comprising a composition according to claim 1, wherein component **A** is put in contact or is adhered on a metallic part produced with component **B**.

20. Device for mercury dispensing comprising a composition according to claim 2, wherein powders of the components **A** and **B** are rolled on a strip of metal.

21. Device according to claim 19, wherein said metallic part is in tubular form wherein the component A is contained.

22. Device for dispensing mercury comprising a composition according to claim 1 or 2, wherein both the components **A** and **B** and the optional component **C** are present in form of powders having particle size lower than 500 µm.

23. Device according to claim 22, wherein said powders have particle size lower than 250 µm.

24. Device according to claim 23, wherein said powders have particle size lower than 125 µm.

25. Device (20) according to claim 22 formed by a pellet of compressed powders of a composition of the invention.

26. Device according to claim 22 obtained by cutting from a metallic strip (30) coated with powders (31) of a composition of the invention.

27. Device (40) according to claim 22 formed by a container (41) wherein is present a composition of the invention (42).

28. Device (50) according to claim 22 consisting of a metallic strap (51) which is provided with a hole (52) the edge (53) of which is depressed with respect to the plane of the strap and a pellet (54) of compressed powders of the composition of the invention in the cavity formed by said hole in said strap.

29. Device according to claim 22 further comprising powders of a getter material.

30. Device according to claim 29 obtained by closing as a ring a piece of a metallic strip whereon one or more tracks (62, 62', 62") of a composition of the invention and one or more tracks (63, 63') of a getter material are present.

## Patentansprüche

1. Quecksilber abgebende Zusammensetzungen, umfassend:
- eine erste Komponente, **A**, die eine Verbindung ist, welche Quecksilber und mindestens ein Metall umfasst, das aus Titan und Zirkonium ausgewählt ist; und
- eine zweite Komponente, **B**, die aus Aluminium oder entweder einer Verbindung oder einer Legierung desselben besteht,
**dadurch gekennzeichnet, dass** die zweite Komponente **B** mindestens 40 Gewichts-% Aluminium enthält und eine Schmelztemperatur hat, die kleiner oder gleich der dieses Elementes ist,
wobei Komponente **A** in einem Gewichtsprozentsatz vorhanden ist, der kleiner oder gleich 90 % des Gesamtgewichts der Zusammensetzung ist.

2. Zusammensetzungen nach Anspruch 1, die ferner eine dritte Komponente, **C**, umfassen, welche unter Metallen und Verbindungen ausgewählt sind, die exotherm mit Aluminium reagieren können.

3. Zusammensetzungen nach Anspruch 1, wobei die Komponente **A** ferner Kupfer oder Kupfer und Zinn umfasst.

4. Zusammensetzungen nach Anspruch 1, wobei Komponente **A** die Verbindung Ti₃Hg ist.

5. Zusammensetzungen nach Anspruch 1, wobei Komponente **B** Aluminium ist.

6. Zusammensetzungen nach Anspruch 1, wobei Komponente **B** eine Legierung aus Aluminium und Kupfer ist.

7. Zusammensetzungen nach Anspruch 6, wobei die Legierung eine prozentuale Gewichtszusammensetzung von 68 % A1 und 32 % Cu hat.

8. Zusammensetzungen nach Anspruch 1, wobei Komponente **B** die intermetallische Verbindung ist, die eine prozentuale Gewichtszusammensetzung von 46,6 % A1 und 53,4 % Cu hat.

9. Zusammensetzungen nach Anspruch 1, wobei Komponente **B** eine Legierung aus Aluminium und Silizium ist.

10. Zusammensetzungen nach Anspruch 9, wobei die Legierung eine prozentuale Gewichtszusammensetzung von 87,3 % A1 und 12,7 % Si hat.

11. Zusammensetzungen nach Anspruch 1, wobei Komponente **B** eine Legierung aus Aluminium, Kupfer und Zinn ist.

12. Zusammensetzungen nach Anspruch 2, wobei Komponente **C** ein Übergangsmetall oder ein Seltenerdmetall ist.

13. Zusammensetzungen nach Anspruch 12, wobei das Metall aus Ni, Fe, Y, Ti und Zr ausgewählt ist.

14. Zusammensetzungen nach Anspruch 2, wobei Komponente **C** ein Oxid ist, das aus Eisenoxid, Fe₂O₃, Kupferoxid, CuO, und Manganoxid, MnO₂, ausgewählt ist.

15. Zusammensetzungen nach Anspruch 2, wobei das Gewichtsverhältnis zwischen den Komponenten **A** und **B** kleiner oder gleich 9:1 ist.

16. Zusammensetzungen nach Anspruch 2, die in einem ternären Diagramm der prozentualen Gewichtszusammensetzung in einem Bereich enthalten sind, der durch die folgenden Werte begrenzt ist:
d) **A** 90 %-**B** 10 %-**C** 0 %
e) **A** 36 %-**B** 4 %-**C** 60 %
f) **A** 10 %-**B** 30 % -**C** 60 %
g) **A** 10 %-**B** 90 % - **C** 0 %.

17. Zusammensetzungen nach Anspruch 16, wobei der Gewichtsprozentsatz der Komponente **C** kleiner oder gleich 20 % ist, wenn diese Komponente ein Oxid ist.

18. Zusammensetzungen nach Anspruch 17, wobei der Prozentsatz kleiner als 5 % ist.

19. Vorrichtung zur Abgabe von Quecksilber, die eine Zusammensetzung nach Anspruch 1 umfasst, wobei Komponente **A** in Kontakt mit einem metallischen Teil gebracht ist oder auf demselben haftet, das mit Komponente **B** erzeugt ist.

20. Vorrichtung zur Abgabe von Quecksilber, das eine Zusammensetzung nach Anspruch 2 umfasst, wobei Pulver von Komponente **A** und **B** auf einen Streifen eines Metalls gerollt sind.

21. Vorrichtung nach Anspruch 19, wobei ein metallisches Teil von Röhrenform ist, in der Komponente **A** enthalten ist.

22. Vorrichtung zur Abgabe von Quecksilber, die eine Zusammensetzung nach Anspruch 2 umfasst, wobei die Komponenten **A** und **B** und die optionale Komponente **C** in Form von Pulvern vorhanden sind, die eine Teilchengröße von weniger als 500 µm haben.

23. Vorrichtung nach Anspruch 22, wobei die Pulver eine Teilchengröße von weniger als 250 µm haben.

24. Vorrichtung nach Anspruch 23, wobei die Pulver eine Teilchengröße von weniger als 125 µm haben.

25. Vorrichtung (20) nach Anspruch 22, die durch ein Pellet von verdichteten Pulvern einer Zusammensetzung der Erfindung gebildet ist.

26. Vorrichtung nach Anspruch 22, die durch Abschneiden von einem Metallstreifen (30) erhalten ist, welcher mit Pulvern (31) einer Zusammensetzung der Erfindung beschichtet ist.

27. Vorrichtung (40) nach Anspruch 22, die durch einen Behälter (41) gebildet ist, in dem eine Zusammensetzung (42) der Erfindung vorhanden ist.

28. Vorrichtung (50) nach Anspruch 22, die aus einem Metallstreifen (51) besteht, welcher mit einem Loch (52), dessen Kante (43) gegenüber der Ebene des Streifens eingedrückt ist, und einem Pellet (54) aus verdichteten Pulvern der Zusammensetzung der Erfindung in dem Hohlraum versehen ist, welcher durch das Loch im Streifen bereitgestellt ist.

29. Vorrichtung nach Anspruch 22, die ferner Pulver eines Gettermaterials umfasst.

30. Vorrichtung nach Anspruch 29, die durch Schließen eines Metallstreifens zum Ring erhalten ist, auf dem eine oder mehrere Bahnen (62, 62', 62") einer Zusammensetzung der Erfindung und eine oder mehrere Bahnen (63, 63') eines Gettermaterials vorhanden sind.

## Revendications

1. Compositions à distribution de mercure, comprenant :
un premier composant A qui est un composé comprenant du mercure et au moins un métal choisi entre le titane et le zirconium ; et
un deuxième composant B se composant d'aluminium ou d'un composé ou de son alliage,
**caractérisées en ce que** ledit deuxième composant B contient au moins 40 % en poids d'aluminium et a une température de fusion égale ou inférieure à celle de cet élément,
dans lesquelles le composant A est présent selon un pourcentage en poids égal ou inférieur à 90 % du poids total de la composition.

2. Compositions selon la revendication 1, comprenant en outre un troisième composant C, choisi parmi des métaux ou des composés pouvant réagir de manière exothermique avec l'aluminium.

3. Compositions selon la revendication 1, dans lesquelles le composant A comprend en outre du cuivre ou du cuivre et de l'étain.

4. Compositions selon la revendication 1, dans lesquelles le composant A est le composé Ti₃Hg.

5. Compositions selon fa revendication 1, dans lesquelles le composant B est de l'aluminium.

6. Compositions selon la revendication 1, dans lesquelles le composant B est un alliage d'aluminium et de cuivre.

7. Compositions selon la revendication 6, dans lesquelles ledit alliage a un pourcentage de composition en poids de Al 68 % - Cu 32 %.

8. Compositions selon la revendication 1, dans lesquelles le composant B est le composé intermétallique ayant une composition en pourcentage en poids de Al 46,6 % - Cu 53,4 %.

9. Compositions selon la revendication 1, dans lesquelles le composant B est un alliage d'aluminium et de silicium.

10. Compositions selon la revendication 9, dans lesquelles ledit alliage a une composition en pourcentage en poids de Al 87,3 % - Si 12,7 %.

11. Compositions selon la revendication 1, dans lesquelles le composant B est un alliage d'aluminium, de cuivre et d'étain.

12. Compositions selon la revendication 2, dans lesquelles le composant C est un métal de transition ou de terres rares.

13. Compositions selon la revendication 12, dans lesquelles ledit métal est choisi parmi Ni, Fe, Y, Ti et Zr.

14. Compositions selon la revendication 2, dans lesquelles le composant C est un oxyde choisi entre l'oxyde de fer, Fe₂O₃, l'oxyde de cuivre, CuO, et l'oxyde de manganèse, MnO₂.

15. Compositions selon la revendication 2, dans lesquelles le rapport en poids entre les composants A et B est égal ou inférieur à 9/1.

16. Compositions selon la revendication 2, qui, dans un diagramme ternaire de composition en pourcentage, sont comprises dans une plage délimitée par les points suivants :
d) A 90 % - B 10 % - C 0 %
e) A 36 % - B 4 % - C 60 %
f) A 10 % - B 30 % - C 60 %
g) A 10 % - B 90 % - C 0 %

17. Compositions selon la revendication 96, dans lesquelles lorsque le composant C est un oxyde, le pourcentage en poids de ce composant est égal ou inférieur à 20 %.

18. Compositions selon la revendication 17, dans lesquelles ledit pourcentage est inférieur à 5 %.

19. Dispositif pour distribuer du mercure comprenant une composition selon la revendication 1, dans lequel le composant A est mis en contact ou est fixé sur une partie métallique produite avec le composant B.

20. Dispositif pour distribuer du mercure comprenant une composition selon la revendication 2, dans lequel les poudres des composants A et B sont laminées sur une bande d'un métal.

21. Dispositif selon la revendication 19, dans lequel ladite partie métallique se présente sous une forme tubulaire, dans lequel le composant A est contenu.

22. Dispositif pour dégager du mercure comprenant une composition selon la revendication 1 ou 2 dans lequel les deux composants A et B et le composant C facultatif sont présents sous la forme de poudre, ayant une taille particulaire inférieure à 500 µm.

23. Dispositif selon la revendication 22, dans lequel lesdites poudres ont une taille particulaire inférieure à 250 µm.

24. Dispositif selon la revendication 23, dans lequel lesdites poudres ont une taille particulaire inférieure à 125 µm.

25. Dispositif (20) selon la revendication 22, formé par un granulé de poudres compressées d'une composition de l'invention.

26. Dispositif selon la revendication 22, obtenu par découpe dans une bande métallique (30) recouverte avec des poudres (31) d'une composition de l'invention.

27. Dispositif (40) selon la revendication 22, formé par un récipient (41) dans lequel se trouve une composition de l'invention (42).

28. Dispositif (50) selon la revendication 22 se composant d'une bande métallique (51) qui est dotée d'un trou (52), dont le bord (53) est enfoncé par rapport au plan de la bande et un granulé (54) de poudres comprimées de la composition de l'invention dans la cavité formée par ledit trou dans ladite bande.

29. Dispositif selon la revendication 22, comprenant en outre des poudres d'un matériau getter.

30. Dispositif selon la revendication 29, obtenu en fermant sous une forme d'anneau, une pièce d'une bande métallique sur laquelle une ou plusieurs traces (62, 62', 62") d'une composition de l'invention et une ou plusieurs traces (63, 63') d'un matériau getter sont présentes.
